# EUROPÄISCHE PATENTSCHRIFT

(11) **EP 3 204 271 B1**
(45) Veröffentlichungstag und Bekanntmachung des Hinweises auf die Patenterteilung: **27.06.2018**
(21) Anmeldenummer: 15771610.1
(22) Anmeldetag: 01.10.2015
(51) Int. Cl.: B60T 13/66, B60T 8/40

(54) **HYDRAULISCHES SICHERHEITSSYSTEM, BREMSANLAGE UND BETRIEBSVERFAHREN**
HYDRAULIC SAFETY SYSTEM, BRAKE SYSTEM, AND OPERATING METHOD
SYSTÈME DE SÉCURITÉ HYDRAULIQUE, SYSTÈME DE FREINAGE ET PROCÉDÉ DE FONCTIONNEMENT

(30) Priorität: 09.10.2014 DE 102014220432
(43) Veröffentlichungstag der Anmeldung: 16.08.2017
(73) Patentinhaber: Continental Teves AG & Co. OHG, 60488 Frankfurt (DE)
(72) Erfinder: FEIGEL, Hans-Jörg, 61191 Rosbach (DE)
(86) Internationale Anmeldenummer: PCT/EP2015/072678
(87) Internationale Veröffentlichungsnummer: WO 2016/055343

(56) Entgegenhaltungen:
- DE-A1- 4 401 524
- DE-A1- 19 538 794
- DE-A1- 19 626 926
- DE-A1-102011 122 776
- DE-A1-102012 212 836
- DE-A1-102012 219 996
- DE-A1-102013 216 423
- US-A1- 2003 020 327

## Beschreibung

Die Erfindung betrifft ein hydraulisches Sicherheitssystem für eine elektrohydraulische Bremsanlage. Sie betrifft weiterhin eine Bremsanlage mit einem derartigen Sicherheitssystem. Sie betrifft weiterhin ein Verfahren zum Betreiben einer derartigen Bremsanlage.

In der Kraftfahrzeugtechnik finden "Brake-by-Wire"-Bremsanlagen eine immer größere Verbreitung. Derartige Bremsanlagen umfassen oftmals neben einem durch den Fahrzeugführer betätigbaren Hauptbremszylinder eine elektrisch ("by-Wire") ansteuerbare Druckbereitstellungseinrichtung, mittels welcher in der Betriebsart "Brake-by-Wire" eine Betätigung der Radbremsen stattfindet.

Bei diesen modernen Bremssystemen, insbesondere elektrohydraulischen Bremssystemen mit der Betriebsart "Brake-by-Wire", ist der Fahrer von dem direkten Zugriff auf die Bremsen entkoppelt. Bei Betätigung des Pedals werden gewöhnlich eine Pedalentkopplungseinheit und ein Simulator betätigt, wobei durch eine Sensorik der Bremswunsch des Fahrers erfasst wird. Der gewöhnlich als Hauptbremszylinder ausgebildete Pedalsimulator dient dazu, dem Fahrer ein möglichst vertrautes und komfortables Bremspedalgefühl zu vermitteln. Der erfasste Bremswunsch führt zu der Bestimmung eines Sollbremsmomentes, woraus dann der Sollbremsdruck für die Bremsen ermittelt wird. Der Bremsdruck wird dann aktiv von einer Druckbereitstellungseinrichtung in den Bremsen aufgebaut. Das tatsächliche Bremsen erfolgt also durch aktiven Druckaufbau in den Bremskreisen mit Hilfe einer Druckbereitstellungseinrichtung, die von einer Steuer- und Regeleinheit angesteuert wird. Durch die hydraulische Entkopplung der Bremspedalbetätigung von dem Druckaufbau lassen sich in derartigen Bremssystemen viele Funktionalitäten wie ABS, ESC, TCS, Hanganfahrhilfe etc. für den Fahrer komfortabel verwirklichen.

In derartigen Bremssystemen ist gewöhnlich eine hydraulische Rückfallebene vorgesehen, durch die der Fahrer durch Muskelkraft bei Betätigung des Bremspedals das Fahrzeug abbremsen bzw. zum Stehen bringen kann, wenn die "By-Wire"-Betriebsart ausfällt oder gestört ist. Während im Normalbetrieb durch eine Pedalentkopplungseinheit die oben beschriebene hydraulische Entkopplung zwischen Bremspedalbetätigung und Bremsdruckaufbau erfolgt, wird in der Rückfallebene diese Entkopplung aufgehoben, so dass der Fahrer direkt Bremsmittel in die Bremskreise verschieben kann.

Die Druckbereitstellungseinrichtung in oben beschriebenen Bremssystemen wird auch als Aktuator bzw. hydraulischer Aktuator bezeichnet. Insbesondere werden Aktuatoren als Linearaktuatoren bzw. Lineareinheiten ausgebildet, bei denen zum Druckaufbau ein Kolben axial in einen hydraulischen Druckraum verschoben wird, der in Reihe mit einem Rotations-Translationsgetriebe gebaut ist.

Aus der WO 2011/029812 A1 ist eine "Brake-by-Wire"-Bremsanlage mit einem bremspedalbetätigbaren Hauptbremszylinder, einem Wegsimulator und einer Druckbereitstellungseinrichtung bekannt. Die Radbremsen werden in einer "Brake-by-Wire"-Betriebsart durch die Druckbereitstellungseinrichtung mit Druck beaufschlagt. In einer Rückfallbetriebsart werden die Radbremsen mittels des mit dem Bremspedal betätigbaren Hauptbremszylinders mit Druck beaufschlagt.

Aus der DE 10 2013 216 423 A1 ist eine Bremsanlage mit einer hydraulischen Druckbereitstellungseinrichtung mit einem zweistufigen Druckraum mit einer ersten und einem zweiten Teilkammer bekannt, wobei nur ein Rückschlagventil vorgesehen ist, welches zwischen der ersten Teilkammer und dem Reservoir hydraulisch angeordnet ist.

Zum Nachsaugen von Bremsflüssigkeit ist bei bekannten Bremsanlagen gewöhnlich die Druckbereitstellungseinrichtung über eine hydraulische Leitung, in die ein Rückschlagventil geschaltet ist, mit einem Reservoir verbunden. Die Sperrseite des Rückschlagventils ist mit dem Reservoir und die Saugseite des Rückschlagventils mit der Druckbereitstellungseinrichtung hydraulisch verbunden.

In die Rückfallebene wird geschaltet, wenn mit Hilfe der Druckbereitstellungseinrichtung kein Druckaufbau mehr möglich ist. Dies ist u. a. dann der Fall, wenn das Rückschlagventil, welches die Druckbereitstellungseinrichtung mit dem Reservoir verbindet, nicht mehr zuverlässig sperrt, so dass ein Druckaufbau nicht mehr zuverlässig möglich ist.

Beim automatisierten Fahren, bei dem das Fahrzeug autonom fährt, muss davon ausgegangen werden, dass der Fahrer über einen längeren Zeitraum nicht in der Lage ist, bei Ausfall dieses Rückschlagventils eine Bremsung in der Rückfalleben durchzuführen.

Der Erfindung liegt daher die Aufgabe zugrunde, auch bei Ausfall des Rückschlagventils noch aktive Bremsungen mit Hilfe der Druckbereitstellungseinrichtung zu ermöglichen.

In Bezug auf das hydraulische Sicherheitssystem wird diese Aufgabe erfindungsgemäß gelöst mit einer hydraulischen Druckbereitstellungseinrichtung mit einem Druckraum, der über wenigstens ein Trennventil mit wenigstens einem Bremskreis verbindbar ist und in den zum Druckaufbau ein Kolben verschoben wird, und einem Reservoir für Bremsflüssigkeit, wobei der Druckraum zweistufig ausgebildet ist mit einer ersten Teilkammer und einer zweiten Teilkammer, wobei beim Druckaufbau der Kolben zunächst in die erste und dann die zweite Teilkammer verschoben wird, wobei die beiden Kammer hydraulisch gegeneinander abgeschlossen sind, wenn der Kolben einen vorgegebenen Weg in die zweite Teilkammer verschoben ist, und wobei ein erstes Rückschlagventil mit seiner Saugseite an der ersten Teilkammer und mit seiner Sperrseite an dem Reservoir hydraulisch angeschlossen, und wobei ein zweites Rückschlagventil mit seiner Saugseite an der zweiten Teilkammer angeschlossen ist, und wobei die Sperrseite des zweiten Rückschlagventils mit der Saugseite des ersten Rückschlagventils verbunden ist.

Vorteilhafte Ausgestaltungen sind Gegenstand der Unteransprüche.

Die Erfindung geht von der Überlegung aus, dass für das ordnungsgemäße Funktionieren einer Bremsanlage, die in der "Brake-by-Wire"-Betriebsart betrieben wird, essentiell wichtig ist, dass die Druckbereitstellungseinrichtung jederzeit bedarfsweise Bremsdruck aufbauen kann. Damit stets genügend Bremsflüssigkeit vorhanden ist, muss sie bedarfsweise aus dem Reservoir Bremsflüssigkeit nachsaugen können. Ein Rückschlagventil muss in der entsprechenden hydraulischen Leitung, die zum Nachsaugen verwendet wird, zuverlässig verhindern, dass beim Druckaufbau nicht Bremsmittel durch diese Leitung zurück in das Reservoir fließt. Fällt das Rückschlagventil teilweise oder vollständig aus bzw. kann es diese Aufgabe nicht mehr erfüllen, muss gewöhnlich in die Rückfallebene geschaltet werden, in der der Fahrer direkten Zugriff auf die Radbremsen erhält und mit Muskelkraft Bremsdruck aufbauen kann.

Bei diesem Umschalten kann aber in gefährlichen Situationen wertvolle Zeit verstreichen, da der Fahrer erkennen muss, dass er nun stärker als zuvor das Bremspedal betätigen muss und sich Bremspedalweg und Pedalgefühl geändert haben. Insofern wäre es wünschenswert, dass auch nach Ausfall des Rückschlagventils noch aktiver Druckaufbau möglich wäre.

Wie nunmehr erkannt wurde, lässt sich dies realisieren, indem der Druckraum zweiteilig aufgebaut ist mit zwei Teilkammern, von denen jeweils eine hydraulische Leitung zu dem Reservoir führt, wobei nach einem vorgegebenen Verfahrweg des Kolbens die beiden Kammern hydraulisch gegeneinander abgedichtet sind, und wobei in jeder der beiden Leitungen ein Rückschlagventil geschaltet ist mit der Besonderheit, dass die Sperrseite des einen Rückschlagventils mit der Saugseite des anderen Rückschlagventils verbunden ist. Diese Konstruktion erlaubt den aktiven Druckaufbau durch die Druckbereitstellungseinrichtung auch dann, wenn eines der beiden Ventile ausgefallen ist, so dass nicht unmittelbar in die herkömmliche Rückfallebene geschaltet werden muss. Auf diese Weise wird gewissermaßen eine aktive Rückfallebene bzw. Zwischenrückfallebene bereitgestellt.

Vorteilhafterweise ist ein Dichtelement vorgesehen, welches in einem eingetauchten Zustand des Kolbens in der zweiten Teilkammer die erste Teilkammer und die zweite Teilkammer gegeneinander hydraulisch abdichtet. Das Dichtelement ist vorzugsweise im Bereich der zweiten Kammer befestigt.

Der Querschnitt der zweiten Teilkammer ist vorzugsweise geringer als der Querschnitt der ersten Teilkammer. Der Kolben der Druckbereitstellungseinrichtung ist bei einer derartigen Ausführung bevorzugt als Stufenkolben ausgebildet, mit einer ersten Stufe, deren Querschnitt dem der ersten Teilkammer entspricht und einer daran sich anschließenden zweiten Stufe, deren Querschnitt dem der zweiten Teilkammer entspricht und die in die zweite Teilkammer eintaucht.

Die erste Teilkammer ist vorzugsweise durch eine hydraulische Leitung mit dem Reservoir verbunden ist, in die ein Verbindungsventil bzw. Hilfsventil geschaltet ist.

Das Verbindungsventil ist bevorzugt elektrisch schaltbar. Alternativ kann das Verbindungsventil auch hydraulisch schaltbar ausgebildet sein.

In Bezug auf die Bremsanlage wird die oben genannte Aufgabe erfindungsgemäß gelöst mit einem mittels eines Bremspedals betätigbaren Hauptbremszylinders, dessen mindestens einer Druckraum mit Bremskreisen zugeordneten Radbremsen, insbesondere trennbar, verbunden ist, mit einer Druckregelventilanordnung zur Regelung und/oder Steuerung eines an einer Radbremse eingesteuerten Radbremsdruckes, mit einem oben beschriebenen hydraulischen Sicherheitssystem und mit einer elektronischen Steuer- und Regeleinheit zur Ansteuerung der Druckbereitstellungseinrichtung des Sicherheitssystems und/oder der Druckventilanordnung.

In Bezug auf das Verfahren wird die oben genannte Aufgabe erfindungsgemäß gelöst indem, bevorzugt zyklisch, die Dichtheit des ersten Rückschlagventils überprüft wird, indem der Kolben in die zweite Teilkammer gefahren wird, bis die beiden Teilkammern hydraulisch getrennt sind, und wobei das Verbindungsventil geöffnet wird und der Druck in der die Druckbereitstellungseinrichtung mit dem wenigstens einen Bremskreis verbindenden Leitung und/oder die Stromaufnahme eines Elektromotors der Druckbereitstellungseinrichtung überwacht wird.

Vorteilhafterweise wird beim Verfahren des Kolbens die Dichtigkeit des zweiten Rückschlagventils überprüft, indem der in der hydraulischen Kammer eingestellte Druck (in der Regel bei jeder Betätigung)beobachtet wird. Bei Druckabbau ohne weitere Kolbenbewegung kann von einer Leckage ausgegangen werden.

Bei Erkennen des Ausfalls beider Rückschlagventile wird vorteilhafterweise in eine hydraulische Rückfallebene geschaltet, wobei die Druckbereitstellungseinrichtung von den Bremskreisen hydraulisch getrennt wird und der Hautbremszylinder mit den Bremskreisen hydraulisch verbunden wird.

Die Vorteile der Erfindung liegen insbesondere darin, dass durch ein beschriebenes Hilfssystem eine zusätzliche Rückfallebene bereitgestellt ist, in der noch aktiver Druckaufbau möglich ist, wodurch die Sicherheit des Fahrers vergrößert wird, da dieser nicht sofort aktiv Bremsdruck durch Muskelkraft aufbauen muss. Damit kann insbesondere in kritischen Situationen das Fahrzeug schnell abgebremst werden, da nicht die Reaktionszeit des Fahrers verstreicht. Dies ist insbesondere beim automatisierten Fahren vorteilhaft aber auch bei von dem Fahrer aktiv gesteuerten Fahrzeugen mit einer elektrohydraulischen Bremsanlage, die im Brake-by-Wire-Betrieb betrieben wird.

Ein Ausführungsbeispiel der Erfindung wird anhand einer Zeichnung näher erläutert. Darin zeigen in stark schematisierter Darstellung:
- FIG. 1: ein hydraulisches Sicherheitssystem in einer ersten bevorzugten Ausführung, und
- FIG. 2: ein hydraulisches Sicherheitssystem in einer zweiten bevorzugten Ausführung.

Gleiche Teile sind in beiden Figuren mit denselben Bezugszeichen versehen.

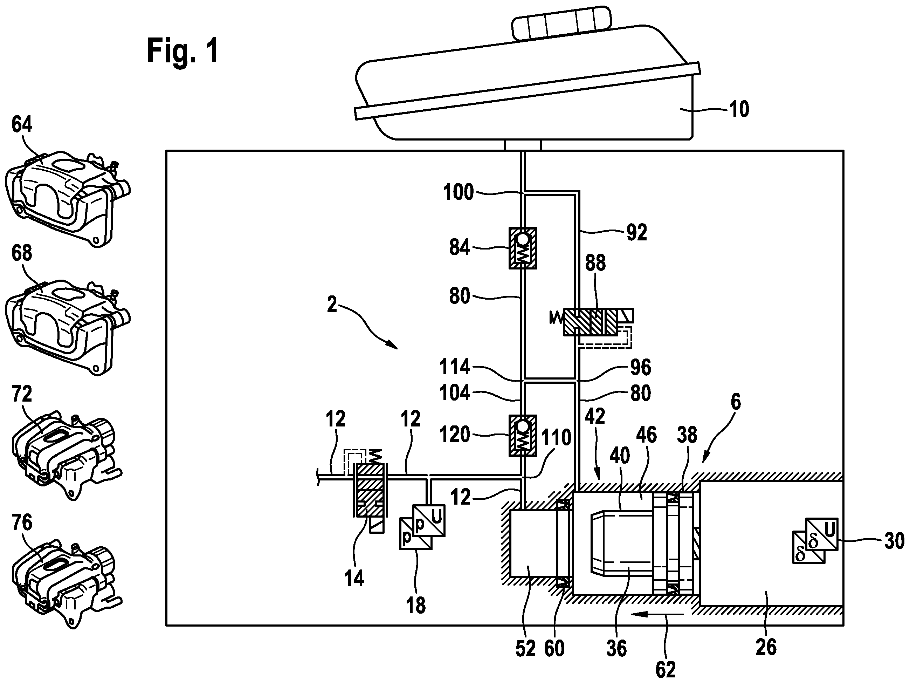

Ein in FIG. 1 dargestelltes elektrohydraulisches Sicherheitssystem 2 bzw. Hilfssystem umfasst eine Druckbereitstellungseinrichtung 6 und ein Reservoir 10 für Bremsflüssigkeit. Über eine hydraulische Leitung 12 ist die Druckbereitstellungseinrichtung 6 mit wenigstens einem Bremskreis verbindbar. In die hydraulische Leitung 12 ist ein elektrisch betätigbares Trennventil 14 geschaltet. Mittels eines redundant ausgeführten Drucksensors 18 kann der in der hydraulischen Leitung 12 vorliegende Druck gemessen werden.

Die Druckbereitstellungseinrichtung 6 umfasst einen durch einen elektromechanischen Aktuator, der einen Elektromotor 26 umfasst, dessen Rotorlage durch einen redundant ausgeführten Rotorlagesensor 30, der den Winkel des Rotors erfasst, bestimmt wird. Die Rotation des Rotors wird durch ein Rotations-Translations-Getriebe, welches vorliegend als Kugelgewindetrieb ausgebildet ist, in die axiale Bewegung eines Kolbens 36 umgewandelt. Zum aktiven Druckaufbau wird der Kolben 36 in einen Druckraum 42 der Druckbereitstellungseinrichtung 6 verschoben. Der Druckraum 42 ist gestuft aufgebaut und umfasst eine erste Teilkammer 46 und eine sich darin anschließende zweite Teilkammer 52. Zum Druckaufbau wird der Kolben 36 in einer Hubrichtung 62 verfahren und taucht dabei zunächst in die erste Teilkammer 46 und dann nach einem weiteren Verfahrweg in die zweite Teilkammer 52 ein. In der zweiten Teilkammer 52 ist ein Dichtelement 60 vorgesehen, welches in einem eingetauchten Zustand des Kolbens 36 in die zweite Teilkammer die erste Teilkammer 46 und die zweite Teilkammer 52 gegeneinander abdichtet. Beide Teilkammern 46, 52 sowie der Kolben 36 haben im Wesentlichen einen runden Querschnitt, wobei der Querschnitt der zweiten Teilkammer 52 kleiner ist als der Querschnitt der ersten Teilkammer 46. Der Kolben 36 ist zweistufig aufgebaut mit einer ersten Stufe 38, deren Außenquerschnitt dem Innenquerschnitt der ersten Teilkammer 46 entspricht und einer sich daran anschließenden zweiten Stufe 40, deren Außenquerschnitt dem Innenquerschnitt der zweiten Teilkammer 52 entspricht. Auf diese Weise kann beim Verfahren des Kolbens 36 in Hubrichtung 62 zunächst Bremsflüssigkeit aus der ersten Teilkammer 36 und, sobald der Kolben 36 in die zweite Teilkammer 52 eintaucht, aus der zweiten Teilkammer 52 verdrängt werden, was zu einem Druckaufbau in den Radbremsen 64, 68, 72, 76 führt.

Das Sicherheitssystem 2 wird bevorzugt in einer Brake-by-Wire-Bremsanlage eingesetzt, bei der durch die Druckbereitstellungseinrichtung 6 aktiv Bremsdruck aufgebaut wird. Die Bremsanlage weist dabei vorliegend zwei Vorderradbremsen 64, 68 und zwei Hinterradbremsen 72, 76 auf.

Das Sicherheitssystem 2 ist geeignet, insbesondere beim automatisierten Fahren, auch bei Ausfall eines Rückschlagventils zwischen Druckbereitstellungseinrichtung 6 und Reservoir 10 noch weiterhin aktiven Druckaufbau mit Hilfe der Druckbereitstellungseinrichtung 6 zu ermöglichen. Bei Fahrzeugen, die weitgehend autonom fahren und bei denen der Fahrer nicht aktiv steuert ist eine relativ lange Verzögerung zu erwarten, bevor der Fahrer bei einem Ausfall des aktiven Druckaufbaus in einer Rückfallebene bei einer Fehlfunktion aktiv eine Bremsung durchführen kann. Aber auch bei nicht-automatischem Fahren ergeben sich dadurch Vorteile, dass gewissermaßen eine Rückfallebene mit aktivem Druck vorgesehen ist, so dass aktiver Druckaufbau auch bei Ausfall eines Rückschlagventils möglich ist.

Über eine erste hydraulische Reservoirleitung 80 ist die erste Teilkammer 46 mit dem Reservoir 10 verbunden. In die Reservoirleitung 80 ist ein erstes Rückschlagventil 84 geschaltet, dessen Sperrseite mit dem Reservoir 10 verbunden ist. Dem Rückschlagventil 84 ist ein stromlos geschlossenes (SG) Hilfsventil bzw. Verbindungsventil 88 parallel geschaltet, welches mechanisch geschaltet wird. Das Verbindungsventil 88 ist in einer hydraulischen Hilfsleitung 92 angeordnet, welche in einem Knotenpunkt 96 von der Reservoirleitung 80 abzweigt und in einem Knotenpunkt 100 wieder in diese mündet.

Eine zweite hydraulische Reservoirleitung 104 verzweigt von an einem Knotenpunkt von der Leitung 12 und mündet in einem Knotenpunkt 114 in die erste Reservoirleitung 80. In die zweite hydraulische Reservoirleitung 104 ist ein zweites Rückschlagventil 120 geschaltet, dessen Sperrseite mit der Saugseite des ersten Rückschlagventils 84 hydraulisch verbunden ist.

Im Folgenden werden zwei Szenarien diskutiert, bei denen jeweils eines der beiden Rückschlagventile 84, 120 ausfällt. Wenn das erste Rückschlagventil 84 ausfällt, kann in der ersten Teilkammer 46 kein hydraulischer Druck mehr aufgebaut werden. Die Bremsanlage muss aber nicht in eine hydraulische Rückfallebene schalten, bei der der Fahrer bei Betätigung des Bremspedals mit Muskelkraft Bremsdruck aufbaut. Sobald der Kolben 36 in die zweite Teilkammer 52 eintaucht, die von der ersten Teilkammer durch das Dichtelement 60, welches in der zweiten Teilkammer 5 angeordnet, abgedichtet wird, kann in der zweiten Teilkammer wieder Druck aufgebaut - das Funktionieren des zweiten Rückschlagventils 120 vorausgesetzt.

Fällt das zweite Rückschlagventil 120 aus, d. h. sperrt es nicht mehr den Fluss von Bremsflüssigkeit aus der Druckbereitstellungseinrichtung 6 in das Reservoir 10, kann trotzdem Druck aufgebaut werden, wenn sich der Kolben 36 in der ersten 46 oder der zweiten Teilkammer 52 befindet, da die Sperrseite des zweiten Rückschlagventils 120 mit der Saugseite des ersten Rückschlagventils 84 verbunden ist über die Leitungen 104 und 80.

Fällt also eines der beiden Rückschlagventile 84, 120 aus, ist somit noch weiterhin aktiver Druckaufbau möglich. Nur in dem sehr unwahrscheinlichen Fall, dass beide Rückschlagventile 84, 120 ausfallen, muss in die hydraulische Rückfallebene geschaltet werden.

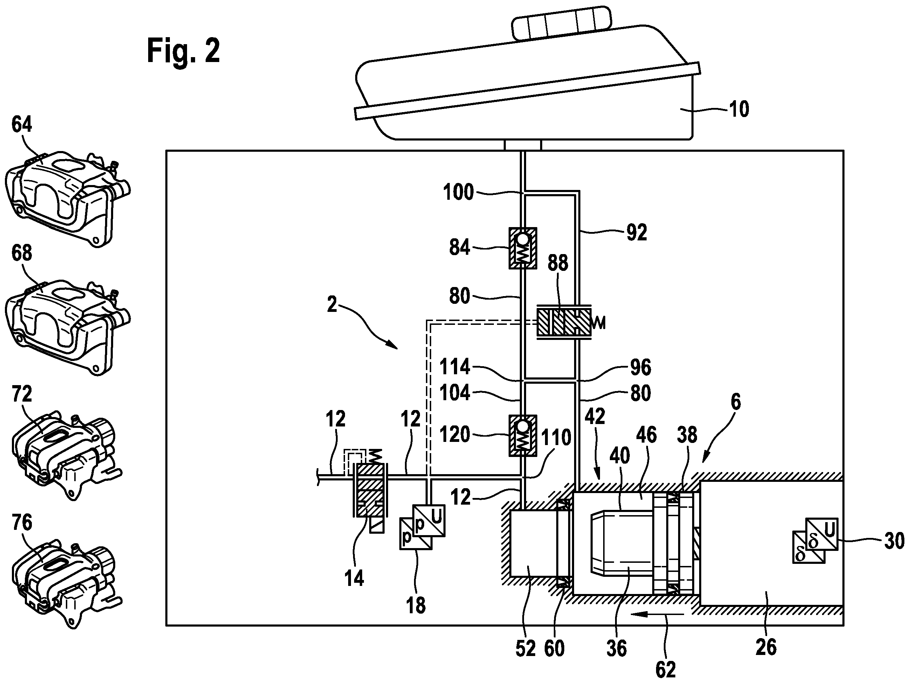

In FIG. 2 ist ein Sicherheitssystem 2 in einer zweiten bevorzugten Ausführung dargestellt. Bei dem in FIG. 2 dargestellten Sicherheitssystem 2 wird das SG Hilfsventil 88 elektrisch geschaltet in Abhängigkeit von einem Signal des Drucksensors 18 und/oder des Motorpositionssensors 30.

Die Funktion der beiden Rückschlagventile 84, 120 kann wie folgt geprüft werden. Die Dichtheit des zweiten Rückschlagventils 120 wird - bevorzugt zyklisch - geprüft, indem der Kolben 36 mit Hilfe des Elektromotors 30 soweit vorgestellt wird, bis die Teilung des Druckraums 42 in zwei Teilkammern 46, 52 erfolgt ist. Dann kann nach Öffnen des Verbindungsventils bzw. Hilfsventils 88 mit Hilfe des Drucksensors 18 oder anhand der Motorstromaufnahme die Dichtheit des ersten Rückschlagventils überprüft werden. Die Dichtheit des ersten Rückschlagventils 84 wird bei jeder Betätigung des hydraulischen Kolbens 36 überprüft.

### Bezugszeichenliste

- 2: Sicherheitssystem
- 6: Druckbereitstellungseinrichtung
- 10: Reservoir
- 12: hydraulische Leitung
- 14: elektrisch betätigbares Trennventil
- 18: Drucksensor
- 26: Elektromotor
- 30: Rotorlagesensor
- 36: Kolben
- 42: Druckraum
- 46: erste Teilkammer
- 52: zweite Teilkammer
- 60: Dichtelement
- 62: Hubrichtung
- 64, 68: Vorderradbremsen
- 72, 76: Hinterradbremsen
- 80: hydraulische Reservoirleitung
- 84: erstes Rückschlagventil
- 88: stromlos geschlossenes (SG) Hilfs- bzw. Verbindungsventil
- 92: Hilfsleitung
- 96: Knotenpunkt
- 100: Knotenpunkt
- 104: hydraulische Reservoirleitung
- 114: Knotenpunkt
- 120: zweites Rückschlagventil

## Patentansprüche

1. Hydraulisches Sicherheitssystem (2) für eine elektrohydraulische Bremsanlage, mit einer hydraulischen Druckbereitstellungseinrichtung (6) mit einem Druckraum (42), der über wenigstens ein Trennventil (14) mit wenigstens einem Bremskreis verbindbar ist und in den zum Druckaufbau ein Kolben (36) verschoben wird, und einem Reservoir (10) für Bremsflüssigkeit, wobei der Druckraum (42) zweistufig ausgebildet ist mit einer ersten Teilkammer (46) und einer zweiten Teilkammer (52), wobei beim Druckaufbau der Kolben (36) zunächst in die erste (46) und dann die zweite Teilkammer (52) verschoben wird, wobei die beiden Teilkammern (46, 52) hydraulisch gegeneinander abgeschlossen sind, wenn der Kolben (36) einen vorgegebenen Weg in die zweite Teilkammer (52) verschoben ist, und wobei ein erstes Rückschlagventil (84) mit seiner Saugseite an der ersten Teilkammer (46) und mit seiner Sperrseite an dem Reservoir (10) hydraulisch angeschlossen ist, **dadurch gekennzeichnet, dass** ein zweites Rückschlagventil (120) mit seiner Saugseite an der zweiten Teilkammer (52) angeschlossen ist, und die Sperrseite des zweiten Rückschlagventils (120) mit der Saugseite des ersten Rückschlagventils (84) verbunden ist.

2. Hydraulisches Sicherheitssystem (2) nach Anspruch 1, wobei ein Dichtelement (60) vorgesehen ist, welches in einem eingetauchten Zustand des Kolbens (36) in der zweiten Teilkammer (52) die erste Teilkammer (46) und die zweite Teilkammer (52) gegeneinander hydraulisch abdichtet.

3. Hydraulisches Sicherheitssystem (2) nach Anspruch 1 oder 2, wobei der Querschnitt der zweiten Teilkammer (52) geringer ist als der Querschnitt der ersten Teilkammer (46).

4. Hydraulisches Sicherheitssystem (2) nach einem der Ansprüche 1 bis 3, wobei die erste Teilkammer (46) durch eine hydraulische Leitung (80) mit dem Reservoir (10) verbunden ist, in die ein Verbindungsventil (88) geschaltet ist.

5. Hydraulisches Sicherheitssystem (2) nach Anspruch 4, wobei das Verbindungsventil (88) elektrisch schaltbar ist.

6. Hydraulisches Sicherheitssystem (2) nach Anspruch 4 oder 5, wobei das Verbindungsventil (88) mechanisch oder hydraulisch schaltbar ist.

7. Bremsanlage mit einem mittels eines Bremspedals betätigbaren Hauptbremszylinders, dessen mindestens einer Druckraum mit Bremskreisen zugeordneten Radbremsen (64, 68, 72, 76), insbesondere trennbar, verbunden ist, mit einer Druckregelventilanordnung zur Regelung und/oder Steuerung eines an einer Radbremse (64, 68, 72, 76) eingesteuerten Radbremsdruckes, mit einem hydraulischen Sicherheitssystem (2) nach einem der Ansprüche 1 bis 6 und mit einer elektronischen Steuer- und Regeleinheit zur Ansteuerung der Druckbereitstellungseinrichtung (6) des Sicherheitssystems (2) und/oder der Druckventilanordnung.

8. Verfahren zum Betreiben einer Bremsanlage nach Anspruch 7, wobei die Dichtheit des ersten Rückschlagventils (84) überprüft wird, indem der Kolben (36) in die zweite Teilkammer (52) gefahren wird, bis die beiden Teilkammern (46, 52) hydraulisch getrennt sind, und wobei das Verbindungsventil (88) geöffnet wird und der Druck in einer die Druckbereitstellungseinrichtung (6) mit dem wenigstens einen Bremskreis verbindenden Leitung (12) und/oder die Stromaufnahme eines Elektromotors (26) der Druckbereitstellungseinrichtung (6) überwacht wird.

9. Verfahren zum Betreiben einer Bremsanlage nach Anspruch 8, wobei die Dichtheit des ersten Rückschlagventils (84) zyklisch überprüft wird.

10. Verfahren zum Betreiben einer Bremsanlage nach Anspruch 8 oder 9, wobei, im Wesentlichen jedes Mal, beim Verfahren des Kolbens (36) die Dichtigkeit des zweiten Rückschlagventils (120) überprüft wird.

11. Verfahren zum Betreiben einer Bremsanlage nach Anspruch 10, wobei bei Erkennen des Ausfalls beider Rückschlagventile (84, 120) in eine hydraulische Rückfallebene geschaltet wird, wobei die Druckbereitstellungseinrichtung (6) von den Bremskreisen hydraulisch getrennt wird und der Hautbremszylinder mit den Bremskreisen hydraulisch verbunden wird.

## Claims

1. Hydraulic safety system (2) for an electrohydraulic brake system, having a hydraulic pressure supply device (6) that has a pressure chamber (42), which can be connected to at least one brake circuit by means of at least one separating valve (14) and into which a piston (36) is moved to build up pressure, and having a reservoir (10) for brake fluid, wherein the pressure chamber (42) is of two-stage design with a first subchamber (46) and a second subchamber (52), wherein during the pressure buildup the piston (36) is first moved into the first subchamber (46) and then into the second subchamber (52), wherein the two subchambers (46, 52) are hydraulically closed off from each other when the piston (46) is moved a specified distance into the second subchamber (52), and wherein the suction side of a first check valve (84) is hydraulically connected to the first subchamber (46) and the blocking side thereof is hydraulically connected to the reservoir (10), **characterized in that** the suction side of a second check valve (120) is connected to the second subchamber (52), and the blocking side of the second check valve (120) is connected to the suction side of the first check valve (84).

2. Hydraulic safety system (2) according to Claim 1, wherein a sealing element (60) is provided, which seals off the first subchamber (46) and the second subchamber (52) hydraulically from one another in a state in which the piston (36) has entered the second subchamber (52).

3. Hydraulic safety system (2) according to Claim 1 or 2, wherein the cross section of the second subchamber (52) is smaller than the cross section of the first subchamber (46).

4. Hydraulic safety system (2) according to one of Claims 1 to 3, wherein the first subchamber (46) is connected to the reservoir (10) by a hydraulic line (80), into which a connecting valve (88) is inserted.

5. Hydraulic safety system (2) according to Claim 4, wherein the connecting valve (88) is electrically switchable.

6. Hydraulic safety system (2) according to Claim 4 or 5, wherein the connecting valve (88) is mechanically or hydraulically switchable.

7. Brake system having a brake master cylinder, which can be actuated by means of a brake pedal and the at least one pressure chamber of which is connected, in particular separably, to wheel brakes (64, 68, 72, 76) assigned to brake circuits, having a pressure control valve arrangement for closed-loop and/or open-loop control of a wheel brake pressure input at one wheel brake (64, 68, 72, 76), having a hydraulic safety system (2) according to one of Claims 1 to 6 and having an electronic open-loop and closed-loop control unit for controlling the pressure supply device (6) of the safety system (2) and/or of the pressure valve arrangement.

8. Method for operating a brake system according to Claim 7, wherein the leaktightness of the first check valve (84) is checked by moving the piston (36) into the second subchamber (52) until the two subchambers (46, 52) are hydraulically separated, and wherein the connecting valve (88) is opened and the pressure in a line (12) connecting the pressure supply device (6) to the at least one brake circuit and/or the power consumption of an electric motor (26) of the pressure supply device (6) is/are monitored.

9. Method for operating a brake system according to Claim 8, wherein the leaktightness of the first check valve (84)is checked cyclically.

10. Method for operating a brake system according to Claim 8 or 9, wherein the leaktightness of the second check valve (120) is checked when the piston (36) is moved, essentially each time the piston is moved.

11. Method for operating a brake system according to Claim 10, wherein a switch is made to a hydraulic fallback level if the failure of both check valves (84, 120) is detected, wherein the pressure supply device (6) is hydraulically separated from the brake circuits and the brake master cylinder is hydraulically connected to the brake circuits.

## Revendications

1. Système de sécurité hydraulique (2) pour un système de freinage électrohydraulique, comprenant un dispositif de fourniture de pression hydraulique (6) pourvu d'une chambre de compression (42), laquelle peut être reliée à au moins un circuit de frein par le biais d'au moins une vanne de séparation (14) et dans laquelle est déplacé un piston (36) en vue de la mise en pression, et d'un réservoir (10) pour du liquide de frein, la chambre de compression (42) étant réalisée à deux étages avec une première chambre partielle (46) et une deuxième chambre partielle (52), le piston (36), lors de la mise en pression, étant déplacé tout d'abord dans la première chambre partielle (46) et ensuite dans la deuxième chambre partielle (52), les deux chambres partielles (46, 52) étant fermées hydrauliquement l'une par rapport à l'autre lorsque le piston (36) est déplacé d'une course prédéfinie dans la deuxième chambre partielle (52), et un premier clapet anti-retour (84) étant raccordé hydrauliquement par son côté aspiration à la première chambre partielle (46) et par son côté blocage au réservoir (10), **caractérisé en ce qu'**un deuxième clapet anti-retour (120) est raccordé par son côté aspiration à la deuxième chambre partielle (52) et le côté blocage du deuxième clapet anti-retour (120) est relié au côté aspiration du premier clapet anti-retour (84).

2. Système de sécurité hydraulique (2) selon la revendication 1, un élément d'étanchéité (60) étant présent qui, lorsque le piston (36) est enfoncé dans la deuxième chambre partielle (52), réalise l'étanchéité hydraulique mutuelle entre la première chambre partielle (46) et la deuxième chambre partielle (52).

3. Système de sécurité hydraulique (2) selon la revendication 1 ou 2, la section transversale de la deuxième chambre partielle (52) étant inférieure à la section transversale de la première chambre partielle (46) .

4. Système de sécurité hydraulique (2) selon l'une des revendications 1 à 3, la première chambre partielle (46) étant reliée au réservoir (10) par une conduite hydraulique (80) dans laquelle est commutée une vanne de liaison (88).

5. Système de sécurité hydraulique (2) selon la revendication 4, la vanne de liaison (88) pouvant être commutée électriquement.

6. Système de sécurité hydraulique (2) selon la revendication 4 ou 5, la vanne de liaison (88) pouvant être commutée mécaniquement ou hydrauliquement.

7. Système de freinage comprenant un maître-cylindre de frein pouvant être actionné au moyen d'une pédale de frein, dont l'au moins une chambre de compression est reliée, notamment de manière séparable, à des freins de roue (64, 68, 72, 76) associés à des circuits, comprenant un arrangement de vannes de régulation de pression destiné à réguler et/ou à commander une pression de frein de roue appliquée dans un frein de roue (64, 68, 72, 76), comprenant un système de sécurité hydraulique (2) selon l'une des revendications 1 à 6 et comprenant une unité de commande et de régulation électronique destinée à commander le dispositif de fourniture de pression (6) du système de sécurité (2) et/ou de l'arrangement de vannes de régulation de pression.

8. Procédé pour faire fonctionner un système de freinage selon la revendication 7, l'étanchéité du premier clapet anti-retour (84) étant contrôlée en déplaçant le piston (36) dans la deuxième chambre partielle (52) jusqu'à ce que les deux chambres partielles (46, 52) soient séparées hydrauliquement, et la vanne de liaison (88) étant ouverte puis la pression dans une conduite (12) qui relie le dispositif de fourniture de pression (6) à l'au moins un circuit de frein et/ou la consommation électrique par un moteur électrique (26) du dispositif de fourniture de pression (6) étant surveillée.

9. Procédé pour faire fonctionner un système de freinage selon la revendication 8, l'étanchéité du premier clapet anti-retour (84) étant contrôlée de manière cyclique.

10. Procédé pour faire fonctionner un système de freinage selon la revendication 8 ou 9, l'étanchéité du deuxième clapet anti-retour (120) étant contrôlée sensiblement à chaque fois lors du déplacement du piston (36).

11. Procédé pour faire fonctionner un système de freinage selon la revendication 10, une commutation dans un plan de sécurisation hydraulique ayant lieu en cas de détection d'une panne des deux clapets anti-retour (84, 120), le dispositif de fourniture de pression (6) étant déconnecté hydrauliquement des circuits de frein et le maître-cylindre de frein étant relié hydrauliquement aux circuits de frein.
